(19) Europäisches Patentamt
European Patent Office
Office européen des brevets

(11) **EP 2 902 367 A1**

(12) **EUROPEAN PATENT APPLICATION**
published in accordance with Art. 153(4) EPC

(43) Date of publication:
**05.08.2015 Bulletin 2015/32**

(51) Int Cl.:
**C02F 1/28** (2006.01)     **C02F 1/42** (2006.01)
**C02F 1/44** (2006.01)

(21) Application number: **13841789.4**

(22) Date of filing: **25.09.2013**

(86) International application number:
**PCT/JP2013/075851**

(87) International publication number:
**WO 2014/050860 (03.04.2014 Gazette 2014/14)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**

(30) Priority: **25.09.2012   JP 2012210731**

(71) Applicant: **Mitsubishi Rayon Co., Ltd.
Tokyo 100-8253 (JP)**

(72) Inventors:
• **FUJII Yuki
  Toyohashi-shi
  Aichi 440-8601 (JP)**

• **TAKEDA Hatsumi
  Toyohashi-shi
  Aichi 440-8601 (JP)**
• **KOBAYASHI Yukio
  Toyohashi-shi
  Aichi 440-8601 (JP)**
• **SANAI Katsuya
  Tokyo 100-8253 (JP)**

(74) Representative: **Hoffmann Eitle
Patent- und Rechtsanwälte PartmbB
Arabellastraße 30
81925 München (DE)**

(54) **WATER PURIFICATION CARTRIDGE AND WATER PURIFIER**

(57)     A water purification cartridge including a main housing and a lid body, wherein the main housing has a cylindrical shape with a bottom having an opening at a top end in a direction of a container axis, contains a filter material and a porous filtration membrane therein, and includes a raw water inlet at an upper cylinder part of the main housing, and wherein the lid body includes an attachment portion to be detachably attached to the top end opening of the main housing, and is configured to close the top end opening of the main housing.

FIG. 1

EP 2 902 367 A1

**Description**

TECHNICAL FIELD

The present invention relates to a water purification cartridge used for a water purifier capable of purifying a relatively large amount of raw water at a time, and also relates to a water purifier using the water purification cartridge.
The present application claims priority based on Japanese Patent Application No. 2012-210731 applied on September 25, 2012 in Japan, the content of which is incorporated herein by reference.

BACKGROUND ART

A pitcher type water purifier having a pouring lip to a cup formed therein, which is mainly used at home, and capable of purifying a relatively large amount of, for example, about 1 to 2 L of raw water at a time, and can be stored in a refrigerator as it is has been known as one of water purifiers. Further, in such a water purifier, for example, as shown in Patent Document 1 described below, a water purification cartridge comprising a porous filtration membrane, activated carbon and an adsorption material (a filter material) such as an ion exchange resin is detachably arranged between a raw water reservoir and a purified water reservoir.
Patent Document 1 discloses a water purifier comprising an outer container having a purified water reservoir, an inner container having a raw water reservoir and a water purification cartridge. In the water purification cartridge disclosed in Patent Document 1, a filter material and a porous filtration membrane are contained in this order from the upstream (the top side) within a main housing having a purified water outlet at the lower end, and the adsorbent and the porous filtration membrane are packed without a partition. Further, it is configured so that an intermediate portion in the vertical direction of the main housing is supported by the inner container via an elastic body. Further, the water purification cartridge described in Patent Document 1, which is fitted to a top end opening of the main housing and comprises a cylindrical cap having a raw water inlet on a side, is arranged within the purified water reservoir in the outer container such that the rim of the top end opening of the main housing is supported by a bottom wall of the inner container, and at the same time, the main housing itself is suspended from the bottom wall of the inner container.
Patent Document 1: Japanese Unexamined Patent Application, Publication No. 2004-230335

DISCLOSURE OF THE INVENTION

Problems to be Solved by the Invention

However, the conventional water purification cartridge described above has the following problems. That is, in the water purification cartridge described in Patent Document 1, increasing the amount of a filter material may be considered when the lifetime of a porous filtration membrane is longer than that of the filter material. In this case, the capacity of the main housing needs to be increased. However, as a consequence, the volume in the purified water reservoir occupied by a portion projected downward from the bottom wall of the inner container is increased. Therefore, the capacity of purified water which can be stored in the purified water reservoir is disadvantageously decreased. Moreover, an increased size of the main housing itself will increase the material cost, leaving a room for improvement in terms of the cost.
The present invention has been made in view of these situations. An object of the present invention is to provide a water purification cartridge and a water purifier in which the content of a filter material can be increased while the increase in the volume of the cartridge minimized, thereby capable of preventing the decrease in the capacity of a purified water reservoir, and also capable of minimizing the increase in the material cost.

Means for Solving the Problems

In order to achieve the above object, the present invention provides the following means.
A water purification cartridge according to the present invention comprises a main housing and a lid body, wherein the main housing has a cylindrical shape with a bottom having an top end opening at one end along the container axis, contains a filter material and a porous filtration membrane, and comprises a raw water inlet at the top end opening side in the container axis, and wherein the lid body has an attachment portion formed therein to be detachably attached at the top end opening of the main housing, and closes the top end opening.
Further, a water purifier according to the present invention is a water purifier comprising the aforementioned water purification cartridge, comprising an outer container having a purified water reservoir and an inner container having a raw water reservoir, wherein a bottom opening of the water purification cartridge is formed at a bottom wall of the inner container, and the main housing is attached to the bottom opening.

According to the present invention, the leakage of the content can be prevented by providing the main housing with a detachable lid body. Further, the lid body does not comprise a raw water inlet, leading to a compact ceiling structure with a reduced height dimension primarily designed for closing the top end opening of the main housing. Therefore, the height dimension of the main housing can be increased by the reduced amount of the height dimension of the lid, thereby increasing the capacity of the main housing. Therefore, the content of a filter material can be increased, and the exchange frequency of the filter material can be reduced without decreasing the capacities of a purified water reservoir and a raw water reservoir, and without significantly changing the size of the water purification cartridge itself. Moreover, since the size of the water purification cartridge itself does not significantly change, the increase in the material cost can be minimized.

Further, in the water purification cartridge according to the present invention, the outer rim of the lid body in the direction perpendicular to the container axis is preferably formed in a size larger than that of the top end opening of the main housing.

In this case, a step is formed because the outer rim of the lid body is larger than that of the top end opening of the main housing. Advantageously, this stepped portion which serves as a finger holding part can provide easy removal of the lid body from the main housing.

Further, in the water purification cartridge according to the present invention, the outer rim of the lid is preferably formed in a size larger than that of the top end opening by between 1 mm and 30 mm inclusive.

In this case, the stepped portion, i.e., the finger holding part is sufficiently provided, and the outer rim of the lid body can be firmly held by the fingers without slippage. Therefore, the lid body can be removed from the main housing more easily and reliably.

Further, in the water purification cartridge according to the present invention, a through hole which allows the inside of the water purification cartridge to communicate with the outside of the water purification cartridge is preferably formed in the lid body.

By having these configurations, air displaced from a porous filtration membrane contained in the main housing in a process of water purification can be discharged through the through hole formed in the lid body, preventing decreased efficiency of water purification due to stagnant air formed in the main housing.

Moreover, in the water purification cartridge according to the present invention, a convex surface protruded upward is preferably formed at a ceiling wall of the lid body.

This can allow the air displaced within the main housing to concentrate into the convex portion in the ceiling wall of the lid body, preventing stagnant air from dispersing to multiple places in the main housing.

Further, in the water purification cartridge according to the present invention, the filter material is preferably contained in a bag material.

By this, the filter materials can be easily exchanged merely by replacing the bag materials.

Further, in the water purification cartridge according to the present invention, the filter material preferably comprises a cation exchange resin.

By this, heavy metals including lead, copper, zinc, arsenic and the like can be removed by adsorption.

Further, in the water purification cartridge according to the present invention, the filter material preferably comprises activated carbon.

By this, chemicals such as chlorine, trihalomethane, and agricultural chemicals can be removed by adsorption.

Further, in the water purification cartridge according to the present invention, the filter material preferably comprises a chelating resin.

By this, heavy metals including lead, copper, zinc, arsenic and the like can be removed by adsorption.

Further, in the water purification cartridge according to the present invention, the lid body is preferably provided with a filter material pressing body extending toward the bottom side in the container axis.

According to the present invention, the lid body attached to the main housing can press the filter material contained in the main housing via the filter material pressing body from above, preventing the filter material from uplifted and detached from the porous filtration membrane. As a result, the adherence between the bag material and the main housing can be assured to achieve excellent water purification performance, and in addition, stagnant air arising between the filter material and the porous filtration membrane can be prevented.

Further, in the water purifier according to the present invention, the fitting strength between the main housing and the lid body is preferably stronger than that between the bottom opening and the main housing.

In this case, when removing a water purification cartridge from an inner container in order to exchange filter materials and porous filtration membranes, the lid body will not be detached from the main housing even if the lid body is held for removal. Instead, the main housing will be first detached from the bottom opening of the inner container, allowing removal of the entire water purification cartridge. Therefore, a case where the lid body alone is removed from the main housing within the raw water reservoir does not arise, and the lid body can prevent that the content of the filter material is scattered in the raw water reservoir.

That is, the present invention relates to the followings.

[1] A water purification cartridge comprising a main housing and a lid body,
wherein the main housing has a cylindrical shape with a bottom having an opening at a top end in a direction of a container axis, and contains a filter material and a porous filtration membrane therein, and comprises a raw water inlet at an upper cylinder part of the main housing, and
wherein the lid body comprises an attachment portion to be detachably attached at the top end opening of the main housing, and is configured to close the top end opening of the main housing.

[2] The water purification cartridge according to [1], wherein a convex surface protruded upward is formed at a ceiling wall of the lid body.

[3] The water purification cartridge according to [1] or [2], wherein the lid body comprises a filter material pressing body extending toward a bottom side of the main housing at the ceiling wall so that the filter material is pressed when the lid body is attached to the main housing.

[4] The water purification cartridge according to any one of [1] to [3], wherein the minimum value of distances between intersections of any straight line perpendicular to the container axis and a peripheral wall of the lid body is larger than the maximum value of distances between intersections of any straight line perpendicular to the container axis and the top end opening of the main housing.

[5] The water purification cartridge according to [4], wherein the difference between the minimum value of distances between the intersections of any straight line perpendicular to the container axis and the peripheral wall of the lid body and the maximum value of distances between the intersections of any straight line perpendicular to the container axis and the top end opening of the main housing is 1 mm to 30 mm.

[6] The water purification cartridge according to any one of [1] to [5], wherein a through hole communicating the inside and the outside of the water purification cartridge is formed in the lid body.

[7] The water purification cartridge according to any one of [2] to [6], wherein at least one of an inner side or an outer side of the ceiling wall of the lid body forms an inclined surface gradually inclined upward as approaching to an apex convexed toward the central axis of the lid body from the peripheral wall of the lid body.

[8] The water purification cartridge according to any one of [2] to [6], wherein at least one of the inner side or the outer side of the ceiling wall of the lid body forms a step as approaching to the apex convexed toward the central axis of the lid body from the peripheral wall of the lid body.

[9] The water purification cartridge according to any one of [3] to [8], wherein the filter material pressing body has a cylindrical shape having an opening on a side.

[10] The water purification cartridge according to any one of [3] to [9], wherein the maximum value of lengths of the filter material pressing body in the direction of the container axis is 16 to 24 mm.

[11] The water purification cartridge according to any one of [3] to [10], wherein a gap between an outer rim of a cross section cut at any plane perpendicular to the direction of the container axis of the filter material pressing body and an inner rim of a cross section cut at any plane perpendicular to the direction of the main housing axis is 0.01 to 10 mm.

[12] The water purification cartridge according to any one of [1] to [11], wherein the filter material is contained in a bag-like article.

[13] The water purification cartridge according to any one of [1] to [12], wherein the filter material comprises a cation exchange resin.

[14] The water purification cartridge according to any one of [1] to [13], wherein the filter material comprises activated carbon.

[15] The water purification cartridge according to any one of [1] to [14], wherein the filter material comprises a chelating resin.

[16] The water purification cartridge according to any one of [13] to [15], wherein a filling factor of the filter material satisfies the formula:

$$50\% \leq A + C \times 1.6 \leq 90\%$$

wherein A represents the filling factor of the filter material except for the cation exchange resin; and C represents the filling factor of the cation exchange resin.

[17] The water purification cartridge according to [16], wherein A/C defined as the ratio of A to C is 0.25 to 1.5.

[18] A water purifier comprising the water purification cartridge according to any one of [1] to [17], comprising:

an outer container having a purified water reservoir, and
an inner container having a raw water reservoir,
wherein a bottom opening of the water purification cartridge is formed at a bottom wall of the inner container, and

wherein the main housing is fitted to the bottom opening.

[19] The water purifier according to [18], wherein a fitting strength between the main housing and the lid body is larger than that between the bottom opening and the main housing.

[20] A filter material wherein at least one adsorbent selected from the group consisting of a cation exchange resin and activated carbon is contained in a bag-like article, the bag-like article comprising a non-woven fabric having a weight per area of 20 to 60 g/m$^2$ and a fiber diameter of 2.2 to 6.6 dtx.

Effects of the Invention

According to the water purification cartridge and the water purifier of the present invention, advantageously, the content of a filter material and the like can be increased while the increase in the capacity of the water purification cartridge is minimized, thereby preventing the decrease in the capacity of a purified water reservoir, and further minimizing the increase in the material cost.

BRIEF DESCRIPTION OF THE DRAWINGS

Fig. 1 shows a longitudinal sectional view illustrating the entire structure of a water purifier according to one embodiment of the present invention;
Fig. 2 shows a longitudinal half sectional view of the water purification cartridge according to one embodiment of the present invention;
Fig. 3 shows a longitudinal half sectional view illustrating a state where the lid body is detached from the main housing of the water purification cartridge according to one embodiment of the present invention;
Fig. 4A shows a side view illustrating the structure of the lid body of the water purification cartridge according to one embodiment of the present invention;
Fig. 4B shows a top view illustrating the structure of the lid body of the water purification cartridge according to one embodiment of the present invention;
Fig. 5A shows a longitudinal sectional view of a state where the lid body of the water purification cartridge according to another embodiment of the present invention is detached; and
Fig. 5B shows a longitudinal sectional view of a state where the lid body of the water purification cartridge according to another embodiment of the present invention is fitted.

PREFERRED MODE FOR CARRYING OUT THE INVENTION

Below, embodiments of the water purification cartridge and the water purifier according to the present invention will be described with reference to the figures.

(First embodiment)

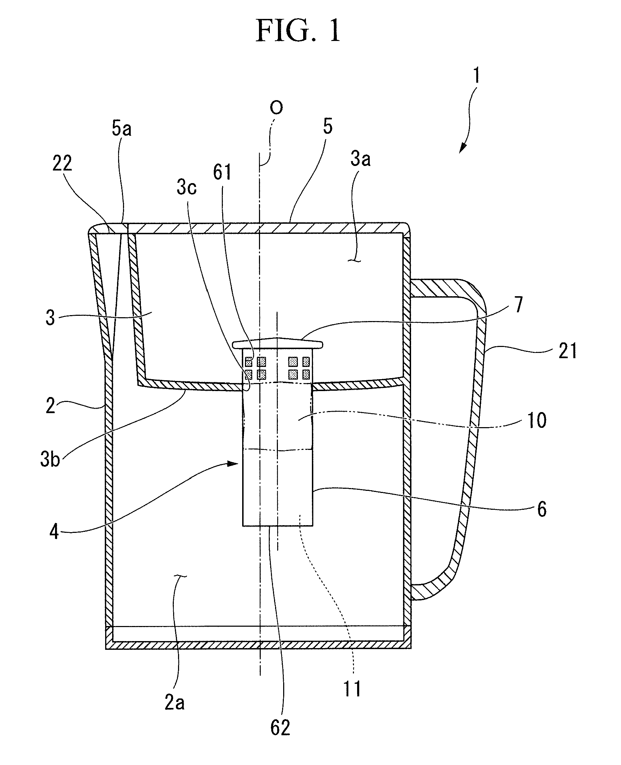

As shown in Fig. 1, a water purifier 1 according to the present embodiment comprises an outer container 2 having a purified water reservoir 2a, an inner container 3 arranged inside the outer container 2 and having a raw water reservoir 3a, and a substantially cylindrical water purification cartridge 4 detachably fitted to a bottom wall 3b of the inner container 3.

Note that for the substantially cylindrical water purification cartridge 4 as used herein, any cross sectional shape perpendicular to the axis direction of the water purification cartridge 4 (the direction of a container axis O described below) may be a perfect circle, an ovoid, an oval, an ellipse and the like, and a perfect circle is preferred in view of the operability of the water purification cartridge.

The outer container 2 has an opening at the top, and has a handle 21 and a pouring lip 22 molded together therein. The outer container 2 is detachably provided with a container lid 5 for closing the opening of the outer container 2. The container lid 5 is provided with a pouring part 5a at a position to cover the pouring lip 22 of the outer container 2, the pouring part 5a capable of opening toward the outside of the container by the pressure of water discharged from the inside of the container. The pouring part 5a rotates around the hinge, allowing opening and closing of the pouring lip 22.

The inner container 3 having a step (not shown in the figures) formed at the top end rim thereof is contained within the outer container 2 such that the step is mounted and engaged at the top end opening rim of the outer container 2. The inside of the inner container 3 constitutes the above raw water reservoir 3a, and the lower half of the outer container 2 (that is, the inside of the outer container 2 except for the inner container 3 and the water purification cartridge 4) constitutes the purified water reservoir 2a.

Further, a circular bottom opening 3c is formed preferably near the center of the bottom wall 3b of the inner container 3. A main housing 6 of the water purification cartridge 4 is detachably fitted to the bottom wall 3b from above in a liquid-tight manner.

Note that the term "circular" as used herein may be in any form as long as it can be fitted to the main housing 6 in a liquid-tight manner. For example, it may be a perfect circle, an ovoid, an oval, an ellipse and the like according to the shape of the main housing 6.

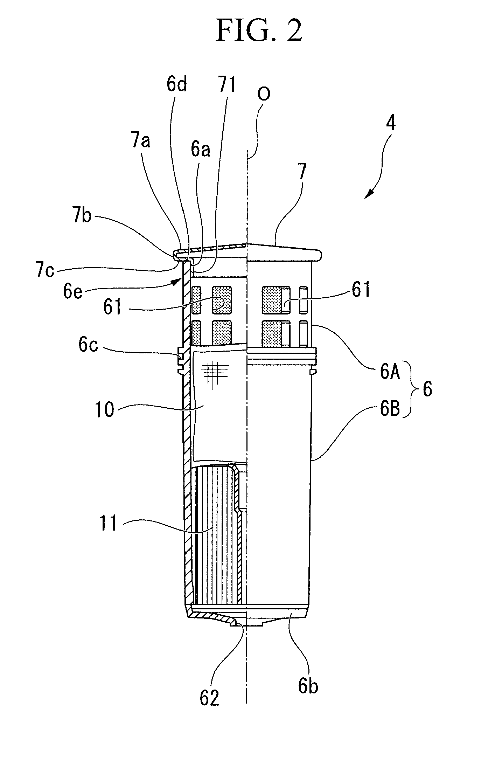

As shown in Fig. 2, the water purification cartridge 4 has a cylindrical shape with a bottom having a top end opening 6a opened at an one end along the container axis O (that is, at a top end side in the axis direction). A filter material 10 contained in a bag material (that is, a bag-like article) and a hollow fiber membrane 11 (a porous filtration membrane) are contained inside the water purification cartridge 4. The water purification cartridge 4 comprises a cylindrical main housing 6 having two or more raw water inlets 61 near the top end opening side (specifically, an upper cylinder part 6A of the main housing as described below) and a lid body 7 comprising an attachment cylinder 71 (an attachment portion) which is detachably attached to the top end opening 6a of the main housing 6 and closing the top end opening 6a of the main housing 6.

Further, in the water purification cartridge 4 according to the present embodiment, a filter material 10 and a hollow fiber membrane 11 are packed in the main housing 6 without a partition.

The term "the container axis O" as used herein means a common axis in which the central axis line of the main housing 6 and the central axis line of the lid body 7 are coaxial in a state where the main housing 6 is covered with the lid body 7. The side of the main housing 6 along the direction of the container axis O is referred to as a lower side, and the side of the lid body 7 is referred to as an upper side. The direction perpendicular to the container axis O is referred to as a radial direction, and the direction of revolving around the container axis O is referred to as a circumferential direction.

Further, the term "the axis direction " as used in the present specification and Claims means the direction along the container axis O.

Note that the term "the central axis line of the main housing 6" as used herein means an axis passing through the center of a virtual circle when the virtual circle is drawn so that at any cross sections of the main housing 6, it is circumscribed with at least one outer rim, and encompasses all of the cross sections of the main housing 6, and the radius is minimum. The term "the central axis line of the lid body 7" as used herein means an axis passing through the center of a virtual circle when the virtual circle is drawn so that at any cross sections of the lid body 7, it is circumscribed with at least one outer rim and encompasses all of the cross sections of the lid body 7, and the radius is minimum.

On one side of the water purification cartridge according to the present invention, the main housing 6 comprises an upper cylinder part 6A in which the aforementioned raw water inlet 61 located at the upper side is formed, and a lower cylinder part 6B located at the lower side of the upper cylinder part 6A in which the hollow fiber membrane 11 and the filter material 10 are layered in this order from the container bottom 6b.

Two or more raw water inlets 61 are formed at the upper cylinder part 6A along the circumferential direction. At the top end of the upper cylinder part 6A, an attachment cylinder 71 of the lid body 7 is fitted to the inner periphery of the top end opening 6a.

The raw water inlet 61 serves as a place through which raw water in the raw water reservoir 3a within the inner container 3 as shown in Fig. 1 flows into the main housing 6. The container bottom 6b having a purified water outlet 62 is detachably provided in the lower cylinder part 6B, the hollow fiber membrane 11 is contained in the substantially lower half part of the lower cylinder parts 6B, and the filter material 10 is contained in the substantially upper half part thereof. Note that the container bottom 6b needs not to be separately provided to the lower cylinder part 6B, but may be integrally molded.

A groove 6c extending through the entire circumference in the circumferential direction between the upper cylinder part 6A and the lower cylinder part 6B is formed in the main housing 6. The bottom opening 3c of the inner container 3 is fitted to the place at which the groove 6c is formed (see Fig. 1). An elastic body such as an O ring and a gasket (not shown) is provided at the groove 6c, and a sealed structure tightly fitted to the bottom opening 3c via the elastic body is formed.

In a case where the total membrane area of the hollow fiber membrane 11 is too small, a filtration speed is slow and the lifetime is short. Therefore, the lower limit is preferably 0.15 $m^2$ to 0.3 $m^2$.

Further, the amount of the filter material 10 is preferably 40 cc to 100 cc, more preferably 50 cc to 70 cc.

Note that the term "the filter material 10" as used herein means a bag-like article having an adsorbent packed inside. Further, the term "the amount of the filter material 10" means the amount (volume) of an adsorbent filled inside a bag-like article.

The amount of the filter material 10 may be measured by filling a graduated cylinder with the adsorbent.

Further, as an adsorbent filled inside a bag-like article, activated carbon, an ion exchange resin or a mixture of an ion exchange resin and activated carbon may be used. The ratio of activated carbon in the adsorbent is preferably 10% to 90% relative to the total volume of the adsorbent, more preferably 20% to 80%.

Forms of an adsorbent include a powder adsorbent, a granular adsorbent prepared by granulating the above powder adsorbent, a fibrous adsorbent and the like.

Such adsorbents include publicly known adsorbents, for example, inorganic adsorbents such as natural product based adsorbents (natural zeolite, silver zeolite, acid clay and the like), and synthetic product based adsorbents (synthetic zeolite, bacteria-adsorbing polymer, hydroxyapatite, molecular sieve, silica gel, silica alumina gel based adsorbent, porous glass, silicic acid titanium and the like); and organic based adsorbents such as powdered activated carbon, granular activated carbon, fibrous activated carbon, block-like activated carbon, extruded activated carbon, molded activated carbon, molecular adsorption resin, synthetic product based granular activated carbon, synthetic product based fibrous activated carbon, ion exchange resins (cation exchange resins, anion exchange resins and the like), ion exchange fibers, chelating resins, chelating fibers, high absorbent resins, high water absorbent fibers, oil absorbent resins, and oil absorbent agents.

As an adsorbent, among others, powdered activated carbon in which antibacterial silver impregnated activated carbon is used, granular activated carbon, fibrous activated carbon, block-like activated carbon, extruded activated carbon, molded activated carbon, molecular adsorption resin, synthetic product based granular activated carbon and synthetic product based fibrous activated carbon are preferred; and powdered activated carbon in which antibacterial silver impregnated activated carbon is used and granular activated carbon are particularly preferred because they have high adsorption performance, and are easy to pack in a bag-like article.

Further, a cation exchange resin is preferably used as an adsorbent since heavy metals including lead, copper, zinc, arsenic and the like can be removed by adsorption. In particular, when using a granular adsorbent, the particle size distribution thereof is preferably 200 $\mu$m to 1700 $\mu$m. In a case where the particle size is too small, the flow resistance of water through a filter material is large, resulting in a slow flow rate. In a case where the particle size is too large, the surface area is small, resulting in decreased removal performance.

Further, the hollow fiber membrane 11 is suitably used for filtering and removing a particulate object of 0.1 $\mu$m or more including microorganism and bacteria. As a hollow fiber membrane, various porous and tubular hollow fiber membranes can be used. Hollow fiber membranes comprising the following various materials can be used: for example, cellulose based, polyolefine (polyethylene, polypropylene and the like) based, polyvinyl alcohol based, ethylene- vinyl alcohol copolymer, polyether based, polymethylmethacrylate (PMMA) based, polysulfone based, polyacrylonitrile based, polytetrafluoroethylene based, polyvinylidene fluoride (PVDF) based, polycarbonate based, polyester based, polyamide based, aromatic polyamide based and the like. Among these, polyolefin based hollow fiber membranes such as polyethylene and polypropylene are preferred in view of handling and processing characteristics of the hollow fiber membrane.

Further, as a bag material used for a bag-like article (a bag), various materials can be used such as polyethylene, polypropylene, vinyl chloride, polyvinylidene chloride, and nylon. As a bag material, a non-woven fabric, a mesh and the like may be used, and there is no particular limitation for the structure as long as it is a material which can prevent an adsorbent inside from leaking outside. Among these, a non-woven fabric is preferred in view of availability and cost. As a bag material, a non-woven fabric having a weight per area (that is, the weight of a bag material per unit area) of 20 to 60 g/m$^2$, and a fiber diameter of 2.2 to 6.6 dtx is particularly preferred since an adsorbent inside will not leak, and the adsorbent can be effectively used.

Further, there is no particular limitation for the filling factor of an adsorbent for filling a bag-like article, but it is preferred to satisfy the following formula:

$$50\% \leq A + C \times 1.6 \leq 90\%$$

(wherein A represents the filling factor of an adsorbent other than a cation exchange resin, and C represents the filling factor of the cation exchange resin)

By this, in a case of having a cation exchange resin as an adsorbent, the adsorbent inside will not leak outside even when the cation exchange resin swells, allowing the high water permeability and increased utilization efficiency of the adsorbent.

Note that the term "the filling factor" as used in the present specification and Claims means a proportion of the volume occupied by an adsorbent relative to the internal volume of a bag-like article itself.

The filling factor may be calculated as follows. Specifically, a bag-like article is filled with an adsorbent as much as possible as long as the article can be sealed, and then the volume (the amount) of this adsorbent is measured with a graduated cylinder to give the internal volume of the bag-like article. Alternatively, the length, width, and height of the bag-like article may be measured, and the internal volume of the bag-like article may be computed based on these. The proportion (%) of the total volume of an adsorbent when the internal volume of a bag-like article is taken as 100 is computed to give a filling factor.

Further, there is no particular limitation for the ratio of A (the filling factor of an adsorbent other than a cation exchange resin) to C (the filling factor of the cation exchange resin), but A/C is preferably 0.25 to 1.5. By this, each adsorbent will not leak, allowing efficient use of adsorbents.

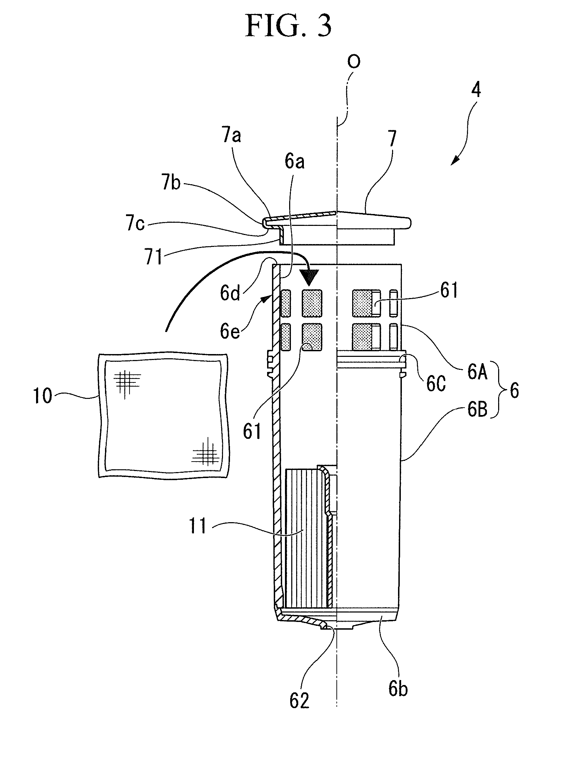

As shown in Fig. 3, the lid body 7 comprises a ceiling wall 7a, a peripheral wall 7b, an outer rim 7c and an attachment cylinder 71. The outer rim 7c is folded back inward in the radial direction from the lower end of the peripheral wall 7b, and comes into contact with a top end opening rim 6d of the main housing 6 from above. In addition, the cylindrical attachment cylinder 71 extending downward is formed at the inner periphery of the outer rim 7c so that the central axis line of the attachment cylinder 71 is located coaxially with the central axis line of the main housing 6 (that is, the container axis O). The attachment cylinder 71 is to be fitted in the top end opening 6a of the main housing 6.

At this time, the fitting strength between the main housing 6 and the lid body 7 is set to be larger than that between the bottom opening 3c of the inner container 3 and the main housing 6 as shown in Fig. 1.

The peripheral wall 7b of the lid body 7 (that is, the outer rim in the direction perpendicular to the container axis O) is formed to be larger than the outer rim of the top end opening 6a of the main housing 6 (Reference numeral 6e in Figs. 2 and 3). In particular, the minimum value of distances between the intersections of the peripheral wall 7b of the lid body 7 and any straight line perpendicular to the container axis O is preferably lager in dimension than the maximum value of distances between the intersections of the outer rim 6e of the top end opening 6a and any straight line perpendicular to the container axis O by 1 mm to 30 mm, more preferably by 2 mm to 10 mm.

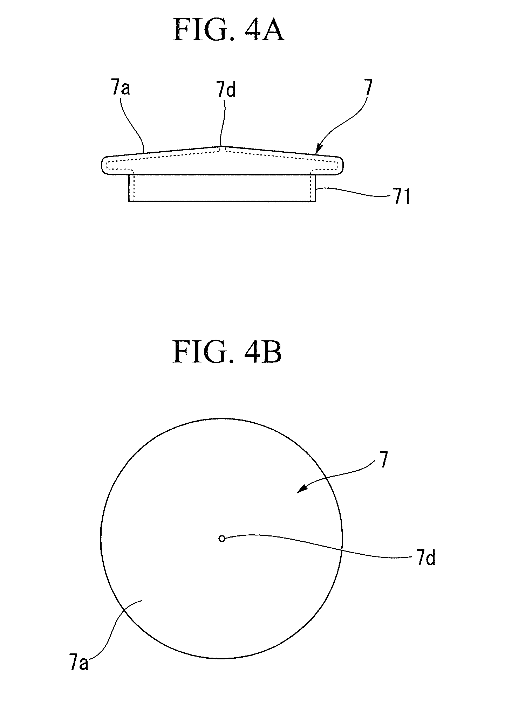

Further, the shape of the lid body 4 shown in Fig. 4B is circular, but it is not limited to be a circular shape. It may be a square, an ovoid, an oval, an ellipse and the like, but it is preferably circular in view of operability.

Note that as shown in Figs. 4A and 4B, a convex surface protruded upward is formed at the ceiling wall 7a, and a through hole 7d which allows the inside of the water purification cartridge 4 to communicate with the outside of the water purification cartridge 4 is formed along the direction of the container axis O.

Specifically, in the ceiling wall 7a, an inclined surface or a step gradually inclined upward as approaching inward in the radial direction (that is, approaching the central axis O) from the peripheral wall 7b is formed at the inner side or the outer side of the ceiling wall 7a, more preferably the inner side and the outer side.

Note that the height dimension of the lid body 7 may vary as long as the effect of the present invention is achieved, but it is preferably, for example, 1 mm to 20 mm. In this case, when it is less than 1 mm, the strength of the lid body is insufficient. When it is more than 20 mm, the lid body may be difficult to remove from the main housing.

Note that the term "the height dimension of the lid body 7" as used herein means the maximum value of lengths in the direction of the container axis O at cross-sections of the lid body 7 cut at any surfaces parallel to the container axis O. Further, the height of the filter material pressing body 72 described below is not included in the "height dimension of the lid body 7"

The water purifier 1 and the water purification cartridge 4 according to the present embodiment as described above can demonstrate the following effects.

That is, as shown in Fig. 1, in the water purifier 1, when raw water is supplied to the inside of the inner container 3 (the raw water reservoir 3a), the raw water is introduced into the inside of the water purification cartridge 4 through the raw water inlet 61 of the water purification cartridge 4 attached to the bottom wall 3b of the inner container 3. Then, chemicals such as chlorine, trihalomethane, and agricultural chemicals as well as heavy metals including lead, copper, zinc, arsenic and the like are removed by adsorption with the filter material 10. Then bacteria, microorganism, suspended matter, particulate lead and the like are further filtered with the hollow fiber membrane 11. Then water is discharged through the purified water outlet 62 at a container bottom 6b of the main housing 6 into the purified water reservoir 2a of the outer container 2.

In the present embodiment, the leakage of the content can be prevented by providing the main housing with the detachable lid body 7. Further, the lid body 7 does not comprise the raw water inlet 61, leading to a compact ceiling structure with a reduced height dimension primarily designed for closing the top end opening 6a of the main housing 6. Therefore, the height dimension of the main housing 6 can be increased by that reduced amount, thereby increasing the capacity.

Therefore, the content of the filter material can be increased, and the exchange frequency of the filter materials can be reduced without decreasing the capacities of the purified water reservoir 2a and the raw water reservoir 3a and without changing the size of the water purification cartridge 4 itself.

Moreover, since the size of the water purification cartridge 4 itself does not change, the increase in the material cost can be minimized.

Further, a step is formed since the peripheral wall 7b of the lid body 7 is larger than the outer rim 6e of the top end opening 6a of the main housing 6. Therefore, advantageously, this stepped portion which serves as a finger holding part can provide easy removal of the lid body 7 from the main housing 6.

In particular, the minimum value of distances between the intersections of the peripheral wall 7b of the lid body 7 and any straight line perpendicular to the container axis O is preferably lager in dimension than the maximum value of distances between the intersections of the top end opening 6a and any straight line perpendicular to the container axis O by 1 to 30 mm, more preferably by 2 to 10 mm. By this, the stepped portion, i.e., a finger holding part is sufficiently provided, and the outer rim of the lid body 7 can be firmly held by the fingers without slippage. Therefore, the lid body 7 can be removed from the main housing 6 more easily and reliably.

Further, by providing the lid body 7 with a through hole which allows the inside of the container to communicate with the outside of the container, air displaced from the hollow fiber membrane 11 contained in the main housing 6 in a water purification process can be discharged through the through hole formed in the lid body 7, preventing the decrease in the water purification efficiency due to stagnant air arising in the main housing 6.

Moreover, by forming a convex surface protruded upward at the ceiling wall 7a of the lid body 7, air displaced within the main housing 6 can be concentrated into the convex portion in the ceiling wall 7a, preventing stagnant air from dispersing to multiple places in the main housing 6.

Moreover, in the ceiling wall 7a, an inclined surface or a step gradually inclined upward as approaching inward in the radial direction (that is, approaching the central axis O) from the peripheral wall 7b is formed at the inner side or the outer side. Therefore, at the inner side of the lid body 7, air can be easily escaped from a pool of stagnant air, and at the outer side of the lid body 7, less raw water may remain in the ceiling wall when raw water is supplied to the raw water reservoir 3a.

Further, according to the present embodiment, the fitting strength between the main housing 6 and the lid body 7 is stronger than that between the bottom opening 3c and the main housing 6. Therefore, when removing the water purification cartridge 4 from the inner container 3 in order to exchange the filter materials 10 and the hollow fiber membranes 11, the lid body 7 is not detached from the main housing 6 even in a case of trying to remove it while holding the lid body 7, and instead the main housing 6 is first detached from the bottom opening 3c of the inner container 3, allowing the whole water purification cartridge 4 to be removed. Therefore, a case where the lid body 7 alone is detached from the main housing 6 within the raw water reservoir 3a does not arise, and the lid body 7 can prevent that the content of the filter material 10 is scattered within the raw water reservoir 3a.

As described above, according to the water purification cartridge and the water purifier of the present embodiment, the content of a filter material and the like can be increased while minimizing the increase in the volume of the cartridge. Advantageously, this can prevent the decrease in the capacity of the purified water reservoir 2a, and further can minimize the increase in the material cost.

Next, another embodiment of the water purification cartridge and the water purifier according to the present invention will be described with reference to the figures. Descriptions about members and portions which are the same as or similar to those in the first embodiment described above are omitted, and the same reference numerals are used. Only different configurations will be described.

(Second embodiment)

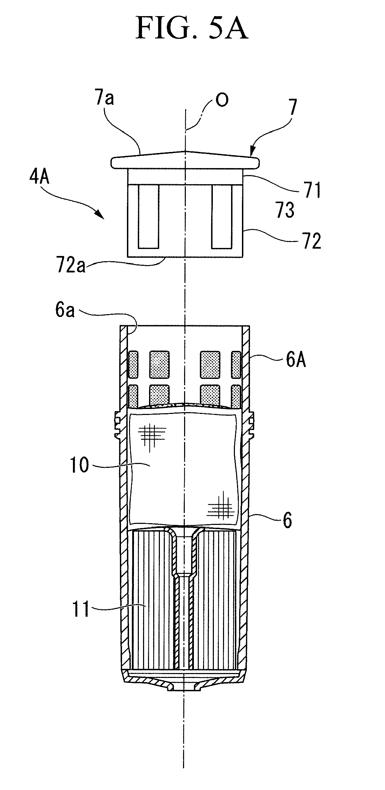

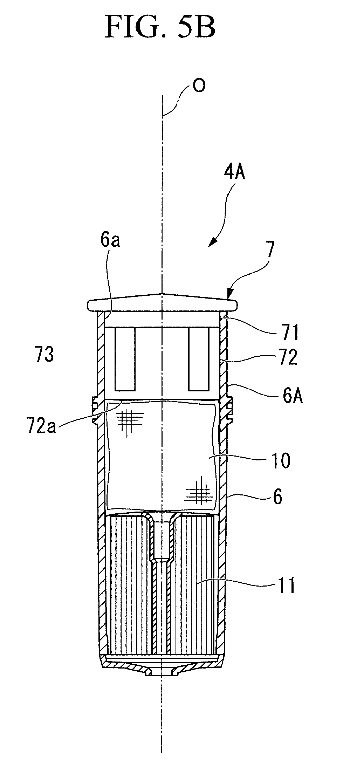

As shown in Figs. 5A and 5B, a water purification cartridge 4A according to the second embodiment comprises the filter material pressing body 72 extending toward the bottom side of the cartridge 4A and provided at the attachment cylinder 71 of the ceiling wall 7a of the lid body 7.

The filter material pressing body 72 is substantially cylindrical in shape, and has an opening 73 on a side. The filter material pressing body 72 may be integrally molded together with the attachment cylinder 71, or may be separately provided inside the attachment cylinder 71. Note that Figs. 5A and 5B show an integrally molded one.

In this case, when the lid body 7 is attached to the main housing 6, the filter material 10 contained in the main housing 6 can be pressed from above with a lower end 72a of the filter material pressing body 72, suppressing flotation of the filter material 10 and detachment from the hollow fiber membrane 11. Therefore, the adherence between the bag material and the main housing 6 is assured to demonstrate excellent water purification performance, and in addition, stagnant air arising between the filter material 10 and the hollow fiber membrane 11 can be prevented.

Further, since the filter material pressing body 72 is substantially cylindrical in shape, and has the opening 73 on the side, raw water is allowed to enter through the opening 73. Therefore, in the water purification cartridge according to the present invention, the water purification performance of the filter material can be fully demonstrated without path shortening.

Further, the maximum value of lengths of the filter material pressing body 72 in the direction of the container axis O is preferably 16 to 24 mm, more preferably 18 to 22 mm. When the above maximum value of lengths is smaller than 16 mm, the bag material cannot be sufficiently pressed, creating a gap between the main housing and the bag material. Therefore, water may not flow into the bag material, resulting in decreased water purification performance. When the above maximum value of lengths is larger than 24 mm, the bag material is pressed too strongly, and the bag material and the main housing are completely sealed. Therefore, air is trapped between the bag material and the hollow fiber membrane, resulting in slowed filtration time.

Further, in the water purification cartridge according to the present invention, a gap between an outer periphery wall 72b of the filter material pressing body 72 and an inner periphery wall 6f of the main housing 6 is preferably 0.01 to 10 mm, more preferably 0.1 to 5 mm. When the gap is smaller than 0.1 mm, flow of water which flows into through the raw water inlet 61 is difficult. When it is larger than 5 mm, the effect of pressing the filter material is decreased.

Note that the technical scope of the present invention shall not be limited to the above embodiments, and various modifications may be made without departing from the spirit of the present invention.

For example, in the aforementioned embodiments, the water purification cartridge 4 has a cylindrical shape, but it is not limited to the above cylindrical shape. For example, it may be rectangular in a cross sectional view. Therefore, the shape of the lid body 7 also need not be circular, and may be suitably changed according to the shape of the main housing 6. Further, the shape of the bottom opening 3c also need not be circular, and may be suitably changed according to the shape of the main housing 6. In the present embodiments, a convex surface protruded upward is form at the ceiling wall 7a of the lid body 7, but not be limited to this, and may be formed in a flat surface.

Further, in the present embodiments, the lid body 7 is configured such that the attachment cylinder 71 is fitted inside the top end opening 6a of the main housing 6, but not limited to this. For example, it may be fitted outside the top end opening 6a, or a screw-fitted structure with a screw may also be possible.

Further, in the present embodiment, the filter material 10 contained in a bag-like article is used. But, of course, the adsorbent itself may be directly contained in the main housing 6 without being contained in a bag-like article.

Furthermore, the position and number of the through holes in the lid body 7 formed for degassing may be suitably selected, or the through hole may be omitted.

Further, the configuration such as a size, and a shape of the outer container 2, the inner container 3, and the container lid 5 of the water purifier 1 according to the present embodiment can appropriately be altered.

Furthermore, a component in the above embodiments may be appropriately replaced with a well-known component without departing from the spirit of the present invention, and the aforementioned variations may be appropriately combined.

EXAMPLES

Below, Examples of the present invention will be described.

[Examples 1 to 5]

A non-woven fabric (Asahi Fiber Industry Co., Ltd., ES051) having a weight per area of 40 g/m$^2$ and a fiber diameter of 6.6 dtx was used to produce a bag-like article (a bag) of 110 mm x 75 mm. As an adsorbent, granular activated carbon (Kuraray Chemical Co., Ltd., T-SCOB20/40), an ion exchange resin (Purolite K. K., C107E), and a chelating resin (Purolite K. K., S930/4922) were mixed by 2.5:5:1. As the filter material 10, 60 cc of the mixed adsorbent was measured out with a graduated cylinder, and were packed into the bag-like article.

In the water purification cartridge 4, the maximum value of distances between the intersections of any straight line perpendicular to the container axis and the top end opening 6d of the main housing was 47 mm, and the minimum value of distances between the intersections of any straight line perpendicular to the container axis and the peripheral wall 7b of the lid body was 53 mm. As the hollow fiber membrane 11, a polyethylene porous hollow fiber (Mitsubishi Rayon Co., Ltd., EX270TH-25, the membrane area is 0.28 m$^2$) was installed in the main housing, and layered over the hollow fiber membrane 11 to place the filter material 10.

Note that the dimension of the filter material pressing body 72, and a gap between the outer periphery wall 72b of the filter material pressing body 72 and the inner periphery wall 6f of the main housing 6 were appropriately selected to give the values set forth in Table 1.

For the water purification cartridge 4 obtained, the flow rate of filtration, the ability of removing residual free chlorine and the ability of filtering residual free chlorine of the filter material 10 were evaluated by the home water purifier testing method in accordance with JISS3201 using a pitcher type water purifier.

The term "the flow rate of filtration" means a time to filter 1 L of water poured into a pitcher type water purifier. Note that the mean value of 10 measurements measured by the aforementioned method is shown as a "the flow rate of filtration" in Table 1.

```
                       [Table 1]
```

|  | Example 1 | Example 2 | Example 3 | Example 4 |
|---|---|---|---|---|
| Height of filter material pressing body | None | 15 mm | 25 mm | 20 mm |
| Gap between peripheral wall of filter material pressing body and inner periphery wall of main housing | None | 1 mm | 1 mm | 11 mm |
| Flow rate of filtration | 8 minutes/L | 8 minutes/L | 15 minutes/L | 8 minutes/L |
| Residual free chlorine removal performance | 80% | 82% | >90% | 83% |
| Residual free chlorine filtration ability | 100 L | 100 L | >200 L | 100 L |
|  | Example 5 | Example 6 | Example 7 | Example 8 |
| Height of filter material pressing body | 20 mm | 20 mm | 16 mm | 23 mm |
| Gap between peripheral wall of filter material pressing body and inner periphery wall of main housing | None | 1 mm | 1 mm | 1 mm |
| Flow rate of filtration | 15 minutes/L | 8 minutes/L | 8 minutes/L | 8 minutes/L |
| Residual free chlorine removal performance | >90% | >90% | >90% | >90% |
| Residual free chlorine filtration ability | >200 L | >200 L | >200 L | >200 L |

INDUSTRIAL APPLICABILITY

The present invention can provide a water purification cartridge in which the content of a filter material and the like can be increased while minimizing the increase in the volume of the water purification cartridge, thereby preventing the decrease in the capacity of a purified water reservoir, and further minimizing the increase in the material cost. Thus it is extremely useful in industry.

EXPLANATION OF REFERENCE NUMERALS

1:          Water purifier
2:          Outer container
2a:         Purified water reservoir
3:          Inner container
3a:         Raw water reservoir
3c:         Bottom opening
4, 4A:      Water purification cartridge
5:          Container lid
6:          Main housing
6a:         Top end opening
6d:         Top end opening rim
6e:         Outer rim of main housing
7:          Lid body
7a:         Ceiling wall
7b:         Peripheral wall
10:         Filter material
11:         Hollow fiber membrane (Porous filtration membrane)
61:         Raw water inlet
62:         Purified water outlet

71:     Attachment cylinder (Attachment portion)
72:     Filter material pressing body
73:     Opening
O:      Container axis

**Claims**

1.  A water purification cartridge comprising a main housing and a lid body,
    wherein the main housing has a cylindrical shape with a bottom having an opening at a top end in a direction of a container axis, contains a filter material and a porous filtration membrane therein, and comprises a raw water inlet at an upper cylinder part of the main housing, and
    wherein the lid body comprises an attachment portion to be detachably attached to the top end opening of the main housing, and is configured to close the top end opening of the main housing.

2.  The water purification cartridge according to claim 1, wherein a convex surface protruded upward is formed at a ceiling wall of the lid body.

3.  The water purification cartridge according to claim 1 or 2, wherein the lid body comprises a filter material pressing body extending toward a bottom side of the main housing at the ceiling wall so that the filter material is pressed when the lid body is attached to the main housing.

4.  The water purification cartridge according to any one of claims 1 to 3, wherein the minimum value of distances between intersections of any straight line perpendicular to the container axis and a peripheral wall of the lid body is larger than the maximum value of distances between intersections of any straight line perpendicular to the container axis and the top end opening of the main housing.

5.  The water purification cartridge according to claim 4, wherein the difference between the minimum value of distances between the intersections of any straight line perpendicular to the container axis and the peripheral wall of the lid body and the maximum value of distances between the intersections of any straight line perpendicular to the container axis and the top end opening of the main housing is 1 mm to 30 mm.

6.  The water purification cartridge according to any one of claims 1 to 5, wherein a through hole communicating with the inside and the outside of the water purification cartridge is formed in the lid body.

7.  The water purification cartridge according to any one of claims 2 to 6, wherein at least one of an inner side or an outer side of the ceiling wall of the lid body forms an inclined surface gradually inclined upward as approaching to an apex convexed toward the central axis of the lid body from the peripheral wall of the lid body.

8.  The water purification cartridge according to any one of claims 2 to 6, wherein at least one of the inner side or the outer side of the ceiling wall of the lid body forms a step as approaching to the apex convexed toward the central axis of the lid body from the peripheral wall of the lid body.

9.  The water purification cartridge according to any one of claims 3 to 8, wherein the filter material pressing body has a cylindrical shape having an opening on a side.

10. The water purification cartridge according to any one of claims 3 to 9, wherein the maximum value of lengths of the filter material pressing body in the direction of the container axis is 16 to 24 mm.

11. The water purification cartridge according to any one of claims 3 to 10, wherein a gap between an outer rim of a cross section cut at any plane perpendicular to the direction of the container axis of the filter material pressing body and an inner rim of a cross section cut at any plane perpendicular to the direction of the main housing axis is 0.01 to 10 mm.

12. The water purification cartridge according to any one of claims 1 to 11, wherein the filter material is contained in a bag-like article.

13. The water purification cartridge according to any one of claims 1 to 12, wherein the filter material comprises a cation exchange resin.

14. The water purification cartridge according to any one of claims 1 to 13, wherein the filter material comprises activated carbon.

15. The water purification cartridge according to any one of claims 1 to 14, wherein the filter material comprises a chelating resin.

16. The water purification cartridge according to any one of claims 13 to 15, wherein a filling factor of the filter material satisfies the formula:

$$50\% \leq A + C \times 1.6 \leq 90\%$$

wherein A represents the filling factor of the filter material except for the cation exchange resin; and C represents the filling factor of the cation exchange resin.

17. The water purification cartridge according to claim 16, wherein A/C defined as the ratio of A to C is 0.25 to 1.5.

18. A water purifier comprising the water purification cartridge according to any one of claims 1 to 17, comprising:

an outer container having a purified water reservoir, and
an inner container having a raw water reservoir,
wherein a bottom opening of the water purification cartridge is formed at a bottom wall of the inner container, and
wherein the main housing is fitted to the bottom opening.

19. The water purifier according to claim 18, wherein a fitting strength between the main housing and the lid body is larger than that between the bottom opening and the main housing.

20. A filter material wherein at least one adsorbent selected from the group consisting of a cation exchange resin and activated carbon is contained in a bag-like article, the bag-like article comprising a non-woven fabric having a weight per area of 20 to 60 g/m$^2$ and a fiber diameter of 2.2 to 6.6 dtx.

# FIG. 1

# FIG. 2

# FIG. 3

# FIG. 4A

# FIG. 4B

# FIG. 5A

# FIG. 5B

<div align="center">

**INTERNATIONAL SEARCH REPORT**

</div>

| International application No. |
| --- |
| PCT/JP2013/075851 |

A. CLASSIFICATION OF SUBJECT MATTER
*C02F1/28*(2006.01)i, *C02F1/42*(2006.01)i, *C02F1/44*(2006.01)i

According to International Patent Classification (IPC) or to both national classification and IPC

B. FIELDS SEARCHED

Minimum documentation searched (classification system followed by classification symbols)
C02F1/28, C02F1/42, C02F1/44

Documentation searched other than minimum documentation to the extent that such documents are included in the fields searched
Jitsuyo Shinan Koho          1922–1996   Jitsuyo Shinan Toroku Koho    1996–2013
Kokai Jitsuyo Shinan Koho    1971–2013   Toroku Jitsuyo Shinan Koho    1994–2013

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
| --- | --- | --- |
| X | WO 2012/108496 A1  (Mitsubishi Rayon Cleansui Co., Ltd.), | 1,2,4-8,14, 18,19 |
| Y | 16 August 2012 (16.08.2012), claims; paragraphs [0065] to [0070]; fig. 2, 12, 13 & CN 102633376 A | 3,9-13,15-17 |
| Y | JP 2012-024741 A  (Osaka Gas Chemicals Co., Ltd.), 09 February 2012 (09.02.2012), claims; paragraphs [0009], [0026], [0037], [0048] (Family: none) | 3,9-11 |

| [X] Further documents are listed in the continuation of Box C. | [ ] See patent family annex. |
| --- | --- |

\*    Special categories of cited documents:
"A"   document defining the general state of the art which is not considered to be of particular relevance
"E"   earlier application or patent but published on or after the international filing date
"L"   document which may throw doubts on priority claim(s) or which is cited to establish the publication date of another citation or other special reason (as specified)
"O"   document referring to an oral disclosure, use, exhibition or other means
"P"   document published prior to the international filing date but later than the priority date claimed

"T"   later document published after the international filing date or priority date and not in conflict with the application but cited to understand the principle or theory underlying the invention
"X"   document of particular relevance; the claimed invention cannot be considered novel or cannot be considered to involve an inventive step when the document is taken alone
"Y"   document of particular relevance; the claimed invention cannot be considered to involve an inventive step when the document is combined with one or more other such documents, such combination being obvious to a person skilled in the art
"&"   document member of the same patent family

| Date of the actual completion of the international search | Date of mailing of the international search report |
| --- | --- |
| 06 December, 2013 (06.12.13) | 17 December, 2013 (17.12.13) |

| Name and mailing address of the ISA/ Japanese Patent Office | Authorized officer |
| --- | --- |
| Facsimile No. | Telephone No. |

Form PCT/ISA/210 (second sheet) (July 2009)

**INTERNATIONAL SEARCH REPORT**

| International application No. |
| --- |
| PCT/JP2013/075851 |

C (Continuation).   DOCUMENTS CONSIDERED TO BE RELEVANT

| Category* | Citation of document, with indication, where appropriate, of the relevant passages | Relevant to claim No. |
| --- | --- | --- |
| X | JP 2010-115612 A  (Panasonic Electric Works Co., Ltd.), | 1,4-6,14,18, 19 |
| Y | 27 May 2010 (27.05.2010), claims; paragraphs [0028], [0031], [0042], [0047] to [0049], [0054]; fig. 1, 3, 4, 7 & KR 10-2010-0054752 A   & CN 101732899 A | 12,13,15-17 |
| Y | Microfilm of the specification and drawings annexed to the request of Japanese Utility Model Application No. 128839/1990(Laid-open No. 087793/1992) (Sanden Corp.), 30 July 1992 (30.07.1992), claims; page 3, line 19 to page 4, line 3; page 7, lines 7 to 9; page 7, line 15 to page 8, line 3; fig. 1 (Family: none) | 12,13,15-17, 20 |
| Y | JP 04-022488 A  (Kao Corp.), 27 January 1992 (27.01.1992), claims; examples (Family: none) | 13,15-17 |
| Y | JP 2004-174357 A  (Matsushita Electric Works, Ltd.), 24 June 2004 (24.06.2004), claims (Family: none) | 13,15-17 |
| Y | JP 07-222971 A  (Kuraray Chemical Co., Ltd.), 22 August 1995 (22.08.1995), claims; examples & JP 7-256239 A | 13,15-17 |
| Y | JP 2010-104905 A  (Kurashiki Textile Manufacturing Co., Ltd.), 13 May 2010 (13.05.2010), example 3 (Family: none) | 20 |

Form PCT/ISA/210 (continuation of second sheet) (July 2009)

## INTERNATIONAL SEARCH REPORT

| International application No. |
|---|
| PCT/JP2013/075851 |

**Box No. II    Observations where certain claims were found unsearchable (Continuation of item 2 of first sheet)**

This international search report has not been established in respect of certain claims under Article 17(2)(a) for the following reasons:

1. ☐ Claims Nos.:
      because they relate to subject matter not required to be searched by this Authority, namely:

2. ☐ Claims Nos.:
      because they relate to parts of the international application that do not comply with the prescribed requirements to such an extent that no meaningful international search can be carried out, specifically:

3. ☐ Claims Nos.:
      because they are dependent claims and are not drafted in accordance with the second and third sentences of Rule 6.4(a).

**Box No. III    Observations where unity of invention is lacking (Continuation of item 3 of first sheet)**

This International Searching Authority found multiple inventions in this international application, as follows:
      Claim 1 and claim 20 have a technical feature common therebetween which is "a filter medium".
      However, the above-said technical feature cannot be considered to be a special technical feature, since the technical feature does not make a contribution over the prior art in the light of the contents disclosed in the document 1 (WO 2012/108496 A1 (Mitsubishi Rayon Cleansui Co., Ltd.), 16 August 2012 (16.08.2012), claims; paragraphs [0065] to [0070]; fig. 2, 12, 13 & CN 102633376 A).
      Further, there is no other same or corresponding special technical feature between these inventions.   (continued to extra sheet)

1. ☐ As all required additional search fees were timely paid by the applicant, this international search report covers all searchable claims.

2. ☒ As all searchable claims could be searched without effort justifying additional fees, this Authority did not invite payment of additional fees.

3. ☐ As only some of the required additional search fees were timely paid by the applicant, this international search report covers only those claims for which fees were paid, specifically claims Nos.:

4. ☐ No required additional search fees were timely paid by the applicant.   Consequently, this international search report is restricted to the invention first mentioned in the claims; it is covered by claims Nos.:

**Remark on Protest**      ☐ The additional search fees were accompanied by the applicant's protest and, where applicable, the payment of a protest fee.

☐ The additional search fees were accompanied by the applicant's protest but the applicable protest fee was not paid within the time limit specified in the invitation.

☐ No protest accompanied the payment of additional search fees.

Form PCT/ISA/210 (continuation of first sheet (2)) (July 2009)

| **INTERNATIONAL SEARCH REPORT** | International application No. |
|---|---|
| | PCT/JP2013/075851 |

Continuation of Box No.III of continuation of first sheet(2)

Accordingly, claims are classified into two inventions each of which has a special technical feature indicated below.
(Invention 1) claims 1-19
An invention relating to a water purification cartridge or a water purifier.
(Invention 2) claim 20
An invention relating to a filter medium.
Claim 20 is not relevant to an invention which involves all of the matters to define the invention in claim 1 and which has a same category.
Further, as a result of the search which has been carried out with respect to claims classified into Invention 1, claim 20 is not relevant to an invention on which it is substantially possible to carry out a search without an additional prior-art search and judgment, and there is no other reason for that it can be considered that it is efficient to carry out a search on claim 20 together with claim 1, and consequently, it is impossible to classify claim 20 into Invention 1.

Form PCT/ISA/210 (extra sheet) (July 2009)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2012210731 A

- JP 2004230335 A